# EUROPEAN PATENT APPLICATION

(11) **EP 4 796 749 A1**
(43) Date of publication of application: **26.08.2026**
(21) Application number: 26160719.6
(22) Date of filing: 25.02.2026
(51) Int. Cl.: E21B 41/00, E21B 33/035, E21B 33/038, E21B 43/01

(54) **A SUBSEA CONDUIT DEPLOYMENT DEVICE AND PROCESS FOR USING SAME**

(30) Priority: 25.02.2025 US 202563763169 P
(71) Applicant: Koil Energy Solutions, Inc., Houston, TX 77073 (US)
(72) Inventor: Fields, Michael Shane, Conroe, Texas, 77303 (US); O Neil Stucky, Jr., Stanley, Cleveland, 3185 (US)
(74) Representative: Dr. Langfinger & Partner

(57) **Abstract**

Subsea deployment device and process for using same. The device can include a landing structure (110) and a frame (120). The frame can include first (125) and second lateral ends (126), upper (121) and lower ends (122), first (135) and second curved structures (136), and a lift point (131). The first and second curved structures can be disposed on the first longitudinal side of the frame. The lower end of the frame can be fixedly attached to the landing structure. The upper end of the frame can define an opening therethrough. The lift point can have a lifting line connected thereto. When the lifting line is connected to the lift point and in a slack configuration, the lifting line can be located between the first longitudinal side and the second longitudinal side of the frame.

## Description

### CROSS-REFERENCE TO RELATED APPLICATION

This application claims priority to U.S. Provisional Patent Application No. 63/763,169, filed on February 25, 2025, which is incorporated by reference herein.

### FIELD

Embodiments described generally relate to subsea deployment devices and processes for using same. More particularly, such embodiments relate to subsea deployment devices that can establish an electrical connection, a fluid connection, and/or a signal, e.g., optical, connection between a first subsea structure and a second subsea structure.

### BACKGROUND

In the offshore energy industry and more specifically the subsea sector of the offshore oil and gas industry, subsea conduits are often used to connect fluid, electrical, or signal conduit(s) between a first subsea structure and a second subsea structure, for example between a subsea manifold and a subsea Christmas tree.

In some instances, the operation of connecting the subsea conduit(s) between the first subsea structure and the second subsea structure is performed using a subsea deployment device. Subsea deployment devices exist in the industry and these subsea deployment devices typically include one or more lifting lines. The lifting line(s) can be connected to a lifting device, e.g., a winch or a crane, that is used to lower and raise the subsea deployment device to and from the seabed. Once the subsea deployment device is resting on the seabed, the lifting line(s) can be disconnected from the lifting device and can be laid over the side of the subsea conduit lifting device. This arrangement creates a risk of damaging the subsea conduit(s) and/or interfering with the operation of connecting the subsea conduit(s) between the first and second subsea structures. Alternatively, the lifting line can be removed from the subsea deployment device by a remotely-operated vehicle (ROV). This is a time-consuming operation that can be expensive, especially when the cost of the offshore marine fleet of vessels involved with the operation is considered.

There is a need, therefore, for an improved subsea deployment device and process for using same.

### SUMMARY

A subsea deployment device and process for using same is provided. The objective of the invention is in particular solved by a subsea deployment device, comprising: a landing structure; and a frame, comprising: a first lateral end, a second lateral end, an upper end, a lower end, a first longitudinal side, and a second longitudinal side; a lift point; and a first curved structure and a second curved structure extending away from the first longitudinal side of the frame, wherein: the lower end of the frame is fixedly attached to the landing structure, the lift point is disposed on the frame or the landing structure, the lift point is configured to connect a lifting line thereto, and the frame is configured such that when a first end of the lifting line is connected to the lift point, and when the lifting line is in a slack configuration, the lifting line is at least partially located between the first longitudinal side of the frame and the second longitudinal side of the frame.

According to one preferred embodiment of the present invention, the lift point is a first lift point and the lifting line is a first lifting line, the subsea deployment device further comprising: a second lift point configured to connect a second lifting line thereto, wherein: the first lift point and the second lift point are each positioned on the frame between the upper end of the frame and the lower end of the frame, and when a first end of the second lifting line is connected to the second lift point, and when the second lifting line is in a slack configuration, the second lifting line is located between the first longitudinal side of the frame and the second longitudinal side of the frame.

According to another preferred embodiment of the present invention, the first curved structure and the second curved structure each define an outer side, the outer side of first curved structure is oriented toward the first lateral end of the frame, and the outer side of the second curved structure is oriented toward the second lateral end of the frame.

It may as well be of advantage according to one embodiment that a third curved structure and a fourth curved structure each disposed on the second longitudinal side of the frame; and at least one connector first part disposed on the frame and configured to receive a corresponding connector second part disposed on an end of a subsea conduit, wherein: the third curved structure and the fourth curved structure each define an outer side, the outer side of third curved structure is oriented toward the first lateral end of the frame, the outer side of the fourth curved structure is oriented toward the second lateral end of the frame, the subsea deployment device is configured to receive a first subsea conduit wound about the first curved structure and the second curved structure, and the subsea deployment device is configured to receive a second subsea conduit wound about the third curved structure and fourth curved structure.

Furthermore, according to another embodiment of the present invention, it may be preferred that the subsea deployment device is further comprising the first lifting line and the second lifting line , wherein: the first ends of the first and second lifting lines are connected to the first and second lift points respectively, and when the first subsea conduit is wound about the first curved structure and the second curved structure, the second subsea conduit is wound about the third curved structure and the fourth curved structure, and the first and second lifting lines are in a slack configuration, the first and second lifting lines are located between the first and second subsea conduits and the second ends of the first and second lifting lines are supported by the upper end of the frame.

Moreover according to one embodiment, it may be preferred that the second ends of the first and second lifting lines are connected to one another with a joining link and the upper end of the frame comprises a saddle to support the joining link in a vertical orientation when the first and second lifting lines are in a slack configuration.

According to another embodiment of the present invention, it may be of advantage that when the first ends of the first lifting line and the second lifting line are connected to the first lift point and the second lift point, respectively, and the first lifting line and the second lifting line are in a taut configuration, the first and second lifting lines remain out of contact with the frame.

Furthermore, it may be preferred according to one embodiment of the present invention that when the first ends of the first lifting line and the second lifting line are connected to the first lift point and the second lift point, respectively, the first lifting line and the second lifting line are routed through an opening defined by the upper end of the frame.

Moreover, it may be advantageous according to one embodiment of the present invention when the first ends of the first lifting line and the second lifting line are connected to the first lift point and the second lift point, respectively, the first lifting line is routed through a first opening defined by the upper end of the frame, and the second lifting line is routed through a second opening defined by the upper end of the frame.

According to another embodiment of the present invention it may be of advantage that the first lift point is a first primary lift point and the second lift point is a second primary lift point, wherein: the frame further comprises a first secondary lift point and a second secondary lift point, the first secondary lift point is laterally disposed between the first primary lift point and the first lateral end of the frame and disposed toward or on the upper end of the frame, the second secondary lift point is laterally disposed between the second primary lift point and the second lateral end of the frame and disposed toward or on the upper end of the frame, and the first secondary lift point is configured to be connected to the first lifting line and the second secondary lift point is configured to be connected to the second lifting line.

Moreover according to one embodiment it may be preferred that the lift point is disposed on the landing structure, the upper end of the frame defines an opening, and the lifting line is routed through the opening defined by the upper end of the frame and configured to be connected to the lift point.

According to one preferred embodiment of the present invention the first curved structure and the second curved structure each define an outer side, the outer side of first curved structure is oriented toward the first lateral end of the frame, and the outer side of the second curved structure is oriented toward the second lateral end of the frame.

According to another preferred embodiment of the present invention, a third curved structure and a fourth curved structure each disposed on the second longitudinal side of the frame; and at least one connector first part disposed on the frame and configured to receive a corresponding connector second part disposed on an end of a subsea conduit, wherein: the third curved structure and the fourth curved structure each define an outer side, the outer side of third curved structure is oriented toward the first lateral end of the frame, the outer side of the fourth curved structure is oriented toward the second lateral end of the frame, the subsea deployment device is configured to receive a first subsea conduit wound about the first curved structure and the second curved structure, and the subsea deployment device is configured to receive a second subsea conduit wound about the third curved structure and fourth curved structure.

Moreover, according to one embodiment, it may be preferred that the first longitudinal side and the second longitudinal side are substantially parallel to one another.

**In** some embodiments, the subsea deployment device can include a landing structure and a frame. The frame can include a first lateral end, a second lateral end, an upper end, a lower end, a first longitudinal side, and a second longitudinal side; a lift point; and a first curved structure and a second curved structure extending away from the first longitudinal side of the frame. The lower end of the frame can be fixedly attached to the landing structure. The lift point can be disposed on the frame or the landing structure. The lift point can be configured to connect a lifting line thereto. The frame can be configured such that when a first end of the lifting line is connected to the lift point, and when the lifting line is in a slack configuration, the lifting line can be at least partially located between the first longitudinal side of the frame and the second longitudinal side of the frame.

In some embodiments, the process for deploying a subsea conduit to a seabed can include obtaining a subsea deployment device that can include: a landing structure; and a frame. The landing frame can include a first lateral end, a second lateral end, an upper end, a lower end, a first longitudinal side and a second longitudinal side; a lift point; and a first curved structure and a second curved structure disposed on a first longitudinal side of the frame. The lower end of the frame can be fixedly attached to the landing structure. The upper end of the frame can define an opening therethrough. The process can further include connecting a first end of a lifting line to the lift point, winding a first subsea conduit about the first curved structure and second curved structure, deploying the subsea deployment device to a seabed; and configuring the lifting line in a slack configuration such that at least a portion of the lifting line is located between the first longitudinal side and the second longitudinal side of the frame.

In some embodiments, the subsea deployment device can include a landing structure; and a frame. The frame can include a first lateral end, a second lateral end, an upper end, a lower end, a first longitudinal side and a second longitudinal side; a first lift point and a second lift point positioned between the upper end and the lower end of the frame, or positioned on the upper end of the frame; and a first curved structure and a second curved structure extending away from the first longitudinal side of the frame. The lower end of the frame can be fixedly attached to the landing structure. The first lift point can be configured to connect a first lifting line thereto. The second lift point can be configured to connect a second lifting line thereto. The upper end of the frame can define an opening therethrough configured to receive the first lifting line and the second lifting line routed therethrough, or configured to receive the first lifting line and the second lifting line, or the upper end of the frame can define a first opening and a second opening therethrough, wherein the first opening can be configured to receive the first lifting line routed therethrough, and wherein the second opening can be configured to receive the second lifting line routed therethrough, and the frame can be configured such that when a first end of the first lifting line can be connected to the first lift point and a first end of the second lifting line can be connected to the second lift point, and the first lifting line and the second lifting line are in a slack configuration, the first and second lifting lines can be located at least partially between the first longitudinal side of the frame and the second longitudinal side of the frame.

### BRIEF DESCRIPTION OF THE DRAWINGS

The various aspects and advantages of the preferred embodiment of the present invention will become apparent to those skilled in the art upon an understanding of the following detailed description of the invention, read in light of the accompanying drawings which are made a part of this specification.
Figure 1 depicts a plan view of an illustrative subsea deployment device, according to one or more embodiments described.
Figure 2 depicts a side elevation view of the subsea deployment device shown in Figure 1.
Figure 3 depicts an end elevation view of the subsea deployment device shown Figure 1.
Figure 4 depicts a side elevation view of the subsea deployment device shown in Figures 1 to 3 that further includes a first lifting line and a second lifting line connected to a first secondary lift point and a second secondary lift point, respectively, in a taut configuration, according to one or more embodiments described.
Figure 5 depicts a side elevation view of the subsea deployment device shown in Figures 1 to 3 that further includes a first lifting line and a second lifting line connected to a first primary lift point and a second primary lift point, respectively, in a taut configuration, according to one or more embodiments described.
Figure 6 depicts a side elevation view of the subsea deployment device shown in Figure 5 with the first lifting line and a second lifting line in a slack configuration, according to one or more embodiments described.
Figure 7 depicts a side elevation of another illustrative subsea deployment device that includes a single lifting line in a slack configuration, according to one or more embodiments described.
Figure 8 depicts a perspective view of a first subsea conduit and a second subsea conduit loaded onto the subsea deployment device shown in Figures 1 to 3, according to one or more embodiments described.

### DETAILED DESCRIPTION

A detailed description will now be provided. Each of the appended claims defines a separate invention, which for infringement purposes is recognized as including equivalents to the various elements or limitations specified in the claims. Depending on the context, all references to the "invention", in some cases, refer to certain specific or preferred embodiments only. In other cases, references to the "invention" refer to subject matter recited in one or more, but not necessarily all, of the claims. It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the figures provided herein. This repetition is for the purpose of simplicity and clarity and does not in itself dictate a relationship between the various exemplary embodiments and/or configurations discussed in the Figures. Moreover, the formation of a first feature over or on a second feature in the description that follows includes embodiments in which the first and second features are formed in direct contact and also includes embodiments in which additional features are formed interposing the first and second features, such that the first and second features are not in direct contact. The exemplary embodiments presented below may be combined in any combination of ways, i.e., any element from one exemplary embodiment may be used in any other exemplary embodiment, without departing from the scope of the disclosure. The figures are not necessarily drawn to scale and certain features and certain views of the figures can be shown exaggerated in scale or in schematic for clarity and/or conciseness.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Also, the naming convention used herein is not intended to distinguish between components that differ in name but not function. Furthermore, in the following discussion and in the claims, the terms "including" and "comprising" are used in an open-ended fashion, and thus should be interpreted to mean "including, but not limited to."

All numerical values in this disclosure are exact or approximate values ("about") unless otherwise specifically stated. Accordingly, various embodiments of the disclosure may deviate from the numbers, values, and ranges disclosed herein without departing from the intended scope.

Further, the term "or" is intended to encompass both exclusive and inclusive cases, i.e., "A or B" is intended to be synonymous with "at least one of A and B," unless otherwise expressly specified herein. The indefinite articles "a" and "an" refer to both singular forms (i.e., "one") and plural referents (i.e., one or more) unless the context clearly dictates otherwise. The terms "up" and "down"; "upward" and "downward"; "upper" and "lower"; "upwardly" and "downwardly"; "above" and "below"; and other like terms used herein refer to relative positions to one another and are not intended to denote a particular spatial orientation since the apparatus and methods of using the same may be equally effective at various angles or orientations.

The terms "perpendicular" and "perpendicularly", as used herein, refer to two lines or vectors that are coplanar that intersect one another at a 90 degree angle. Further, the term "substantially" when used in the context of "substantially perpendicular" means a first line and a second line or a first plane and a second plane are orientated at angles of about 85 degrees, about 87 degrees, or about 89 degrees to about 91 degrees, about 93 degrees, or about 95 degrees with respect to one another. Further, the term "substantially" when used in the context of "substantially parallel" means a first line and a second line or a first plane and a second plane are orientated at angles of about 170 degrees, about 175 degrees, about 177 degrees, or about 179 degrees to about 181 degrees, about 183 degrees, or about 185 degrees, or about 190 degrees with respect to one another.

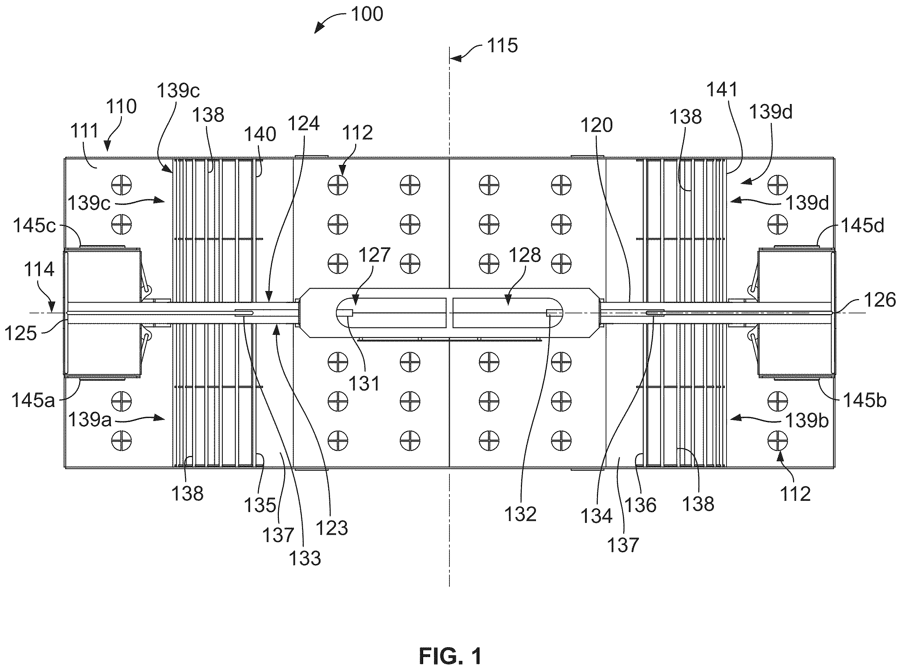

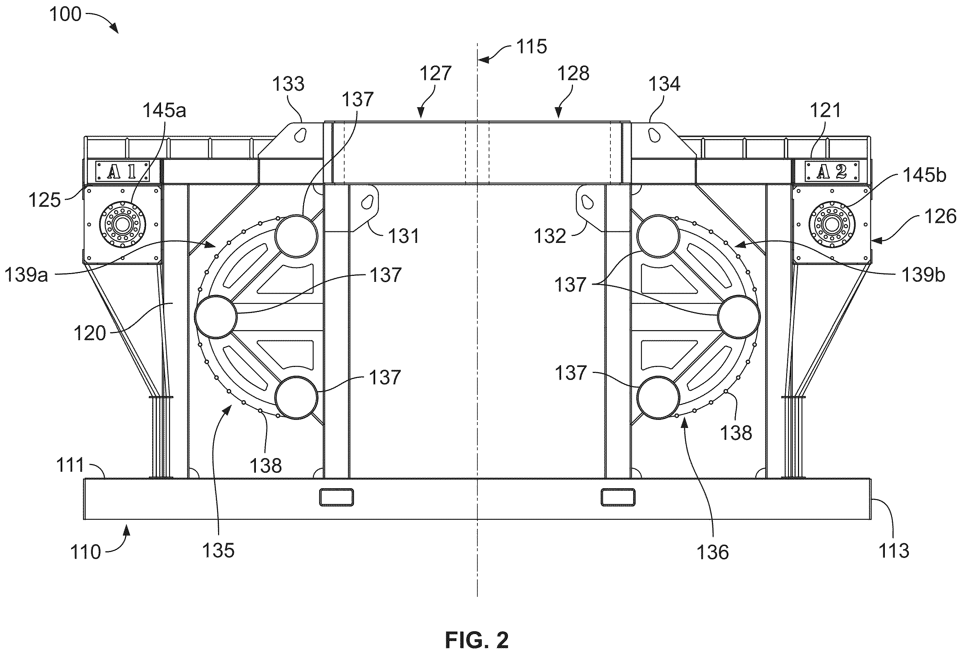

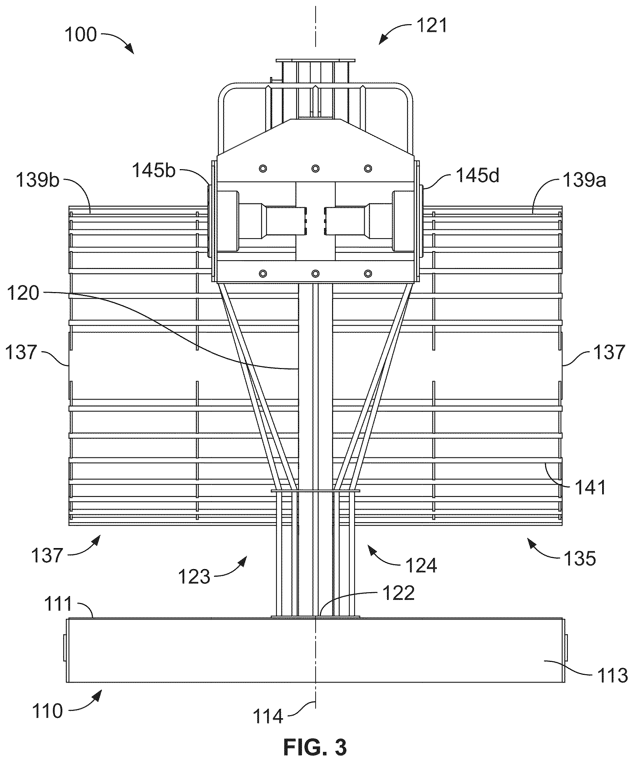

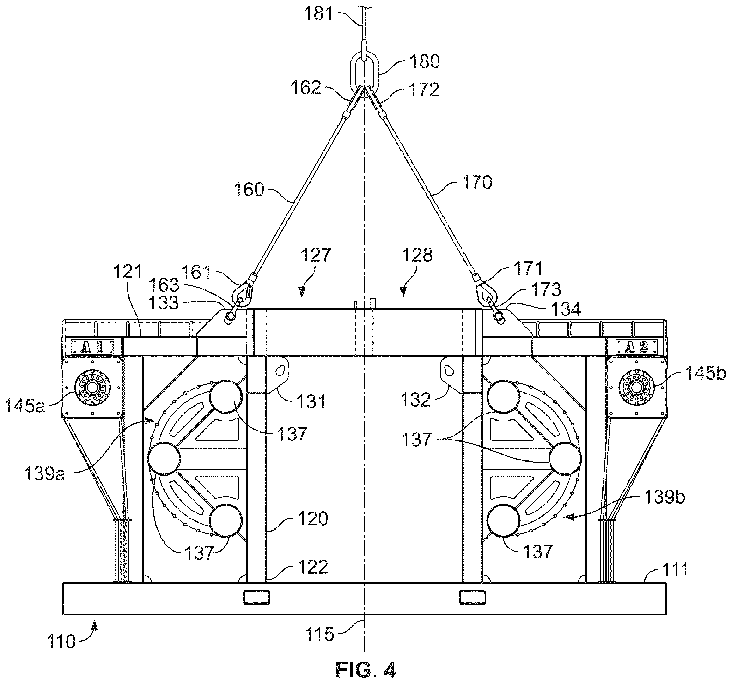

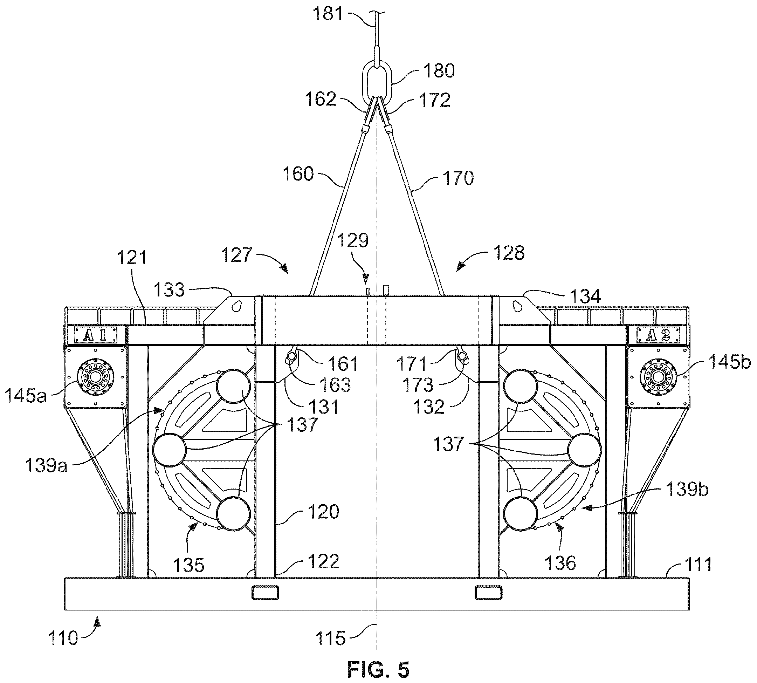

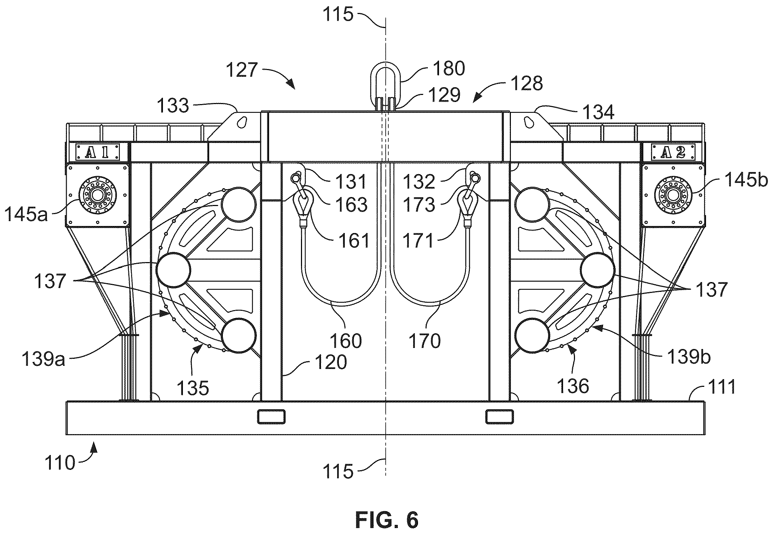

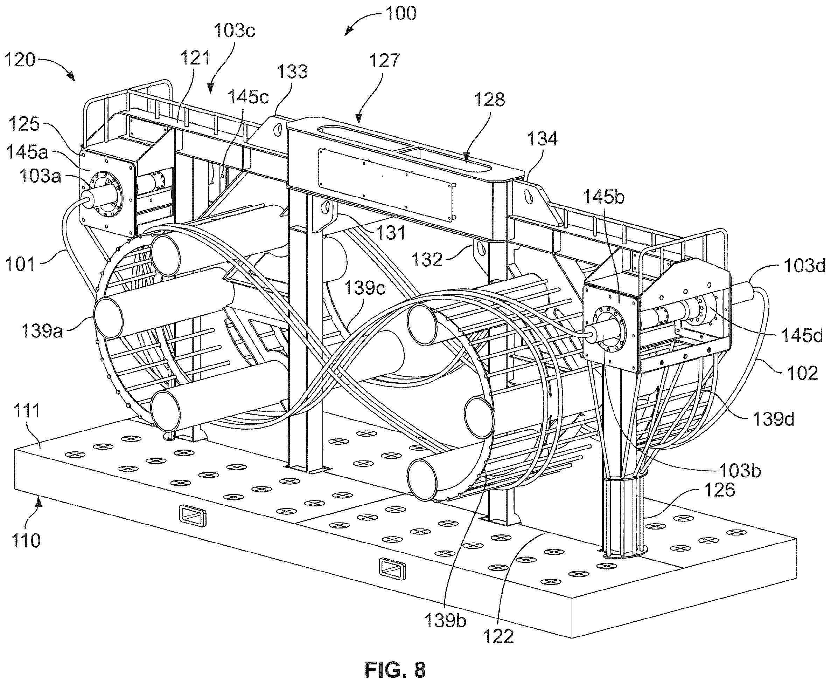

Figure 1 depicts a plan view of an illustrative subsea deployment device 100, according to one or more embodiments. Figures 2 and 3 depict a side elevation view and an end elevation view of the subsea deployment device 100, respectively, shown in Figure 1. Figure 4 depicts a side elevation view of the subsea deployment device 100 shown in Figures 1 to 3 that further includes a first lifting line 160 and a second lifting line 170 connected to a first lift point or "first secondary lift point" 133 and a second lift point or "second secondary lift point" 134, respectively, in a taut configuration, according to one or more embodiments. Figure 5 depicts a side elevation view of the subsea deployment device 100 shown in Figures 1 to 3 that further includes the first lifting line 160 and the second lifting line 170 connected to a first lift point or "first primary lift point" 131 and a second lift point or "second primary lift point" 132, respectively, in a taut configuration, according to one or more embodiments. Figure 6 depicts a side elevation view of the subsea deployment device 100 shown in Figure 5 with the first lifting line 160 and the second lifting line 170 in a slack configuration, according to one or more embodiments. In some embodiments, the subsea deployment device 100 can be configured to receive a first subsea conduit 101. In some embodiments, the subsea deployment device 100 can be configured to receive the first subsea conduit 101 and a second subsea conduit 102. Figure 8 depicts a perspective view of the first subsea conduit 101 and the second subsea conduit 102 loaded onto the subsea deployment device 100 shown in Figures 1 to 3.

Referring to Figures 1-6 and Figure 8 collectively, in some embodiments, the subsea deployment device 100 can include a landing structure 110 and a frame 120. In some embodiments the subsea deployment device 100 can be configured to couple, attach, join, link, or otherwise connect the first lifting line 160 and the second lifting line 170 thereto.

In some embodiments, the landing structure 110 can be configured to at least partially sit, rest, or otherwise contact a seabed when the subsea deployment device 100 is deployed and lowered to the seabed. In some embodiments, the landing structure 110 can be configured as a steel framed structure that includes a plate 111 that can define a plurality of bores 112 therethrough. In some embodiments, the landing structure 110 can be or can include, but is not limited to a mud mat (shown), one or more fenders (not shown), or a combination thereof. In some embodiments, the landing structure 110 can be fabricated from a plurality of structural shapes 113, for example or structural bodies (e.g., a W-flange, an I-flange, a C-section, structural tube, etc.), one or more tubular member or other bodies having any desired shape or combination of shapes. In some embodiments, the landing structure 110 can be fabricated from can be or can include, but is not limited to, a plurality of structural shapes, a plurality of tubular members and the plate 111 can be connected or otherwise disposed on the plurality of structural shapes or tubular members. In some embodiments, the landing structure 110 can have a rectangular shape when viewed in a plan view (see Figure 1). In other embodiments, the landing structure 110 can have any desired shape, e.g., any polygonal shape such as a hexagonal or octagonal. In some embodiments, the landing structure 110 can be configured to support a load of the landing structure 110 and the additional components of the subsea deployment device 100, e.g., frame 120, the first subsea conduit101, and the second subsea conduit 102 disposed thereon when the subsea deployment device 100 is disposed on a seabed.

In some embodiments, the frame 120 can be fixedly attached to or otherwise disposed on the landing structure 110. In some embodiments, the frame 120 can include an upper end 121, a lower end 122, a first longitudinal side 123, a second longitudinal side 124, a first lateral end 125, and a second lateral end 126. In some embodiments, the lower end 122 of the frame 120 can be disposed on or fixedly attached to the landing structure 110. In some embodiments, the lower end 122 of the frame 120 can be disposed on or connected to the landing structure 110 along a longitudinal central plane 114 of the subsea deployment device 100.

In some embodiments, the first longitudinal side 123 and the second longitudinal side 124 can be parallel or substantially parallel with a longitudinal central plane 114 of the subsea deployment device 100. It should be understood that, in other embodiments, the first longitudinal side 123 and the second longitudinal side 124 can be angled with respect to one another such that the first longitudinal side 123 and the second longitudinal side 124 can be non-parallel or not substantially parallel with respect to one another.

In some embodiments, the frame 120 can include the first primary lift point 131 and the second primary lift point 132 or the first secondary lift point 133 and the second secondary lift point 134. In some embodiments, the frame 120 can include the first primary lift point 131 and the second primary lift point 132 and the first secondary lift point 133 and the second secondary lift point 134. In some embodiments, the first primary lift point 131 and the second primary lift point 132 and/or the first secondary lift point 133 and the second secondary lift point 134 can be positioned or disposed on the frame 120.

In some embodiments, the first primary lift point 131 and/or the first secondary lift point 133 can be laterally positioned near or toward the first lateral end 125 and positioned toward or on the upper end 121 of the frame 120. In some embodiments, the first primary lift point 131 and/or the first secondary lift point 133 can be positioned between the first lateral end 125 and a lateral central plane 115 of the subsea deployment device 100. In some embodiments, the second primary lift point 132 and/or the second secondary lift point 134 can be positioned laterally near or toward the second lateral end 126 and can be positioned toward or on the upper end 121 of the frame 120. In some embodiments, the second primary lift point 132 and/or the second secondary lift point 134 can be positioned between the second lateral end 126 and the lateral central plane 115 of the subsea deployment device 100.

In some embodiments, the first and second primary lift points 131 and 132 and/or the first and second secondary lift points 133 and 134 and can be positioned symmetrically or substantially symmetrically about the lateral central plane 115 of the subsea deployment device 100 with respect to one another. As used herein, the term "substantially", when used in the context of "substantially symmetrically about a lateral centerline" refers to a lateral central plane 115 that runs through the center of the frame 120 between the first lateral end 125 and the second lateral end 126. In other embodiments, the first and second primary lift points 131 and 132 and/or the first and second secondary lift points 133 and 134 can be positioned symmetrically or substantially symmetrically about a lateral center of mass of the frame 120 or the subsea deployment device 100 with respect to one another. As used herein, the term "substantially", when used in the context of "substantially symmetrically about a longitudinal central plane 114 or a lateral central plane 115 of the frame 120 or the subsea deployment device 100", means that a first body can be positioned at a first distance from the longitudinal central plane 114 or the lateral central plane 115 and a second body can be positioned at a second distance from the longitudinal central plane 114 or the lateral central plane 115, where the first distance and the second distance can be within about 1%, about 2%, about 3%, about 5%, about 7%, of one another to about 10%, about 12%, about15%, 17%, or about 20% of one another.

It should be understood that the first and second primary lift points 131 and 132, respectively, can independently be configured as a padeye, a lifting lug, a trunnion, or any similar structure (padeyes are shown in Figures 2 and 4-7). Similarly, in some embodiments, the first and second secondary lift points 133, 134, respectively, can independently be configured as a padeye, a lifting lug, a trunnion, or any similar structure (padeyes are shown in Figures 2 and 4-7). It should also be understood that, in some embodiments, the first lifting line 160 and the second lifting line 170 can be a single or continuous elongated body having a first end and a second end that can each be configured to connect, attach, join, link, or otherwise connect to the first primary lift point 131 or the first secondary lift point 133, respectively, and the second primary lift point 132 or the second secondary lift point 134, respectively.

In some embodiments, the first primary lift point 131 can be positioned between the upper end 121 and the lower end 122 of the frame 120. In some embodiments, the second primary lift point 132 can be positioned between the upper end 121 and the lower end 122 of the frame 120. In some embodiments, the first secondary lift point 133 and the second secondary lift point 134 can be positioned on or above the upper end 121 of the frame 120. In some embodiments, the second secondary lift point 134 can be positioned on or above the upper end 121 of the frame 120. In some embodiments, the first and second primary lift points 131 and 132 can be laterally disposed on the frame 120 between the lateral central plane 115 or the lateral center of mass of the frame 120 and the first lateral end 125 and the second lateral end 126, respectively of the frame 120. In some embodiments, the first and second primary lift points 131 and 132, respectively, can be positioned symmetrically about the lateral central plane 115 with respect to one another. In some embodiments, the first and second primary lift points 131 and 132 134 can independently be configured as a padeye, a lifting lug, a trunnion, or any similar structure (padeyes are shown in Figures 2 and 4-7).

In some embodiments, the first longitudinal side 123 can be configured as an at least partially planar structure, e.g., a plate structure, and the second longitudinal side 124 can be configured as an at least partially planar structure, e.g., a plate structure. In some embodiments, the first longitudinal side 123 and the second longitudinal side 124 can be separated from one another in a lateral direction. In some embodiments, the first longitudinal side 123 and the second longitudinal side 124 can be substantially symmetric with respect to one another about the longitudinal central plane 114 of the landing structure 110 to create a space or separation distance between the first longitudinal side 123 and the second longitudinal side 124.

In some embodiments, the upper end 121 of the frame 120 can define one or more openings therethrough, e.g., a first opening 127 and a second opening 128. In some embodiments, the upper end 121 of the frame 120 can define a single opening, i.e., opening 127, or three or more openings. In some embodiments, the first opening 127 and the second opening 128 can each have an elongated or oval shape. In some embodiments, when the upper end 121 of the frame 120 only includes one opening, e.g., the first or second opening 127 or 128, the single opening can be an elongated or oval shaped opening that can be symmetric or substantially about the lateral central plane 115 and/or can be symmetric or substantially symmetric about the lateral central plane 115 of the subsea deployment device 100. In some embodiments, the first primary lift point 131 and the second primary lift point 132 can be positioned at least partially beneath the first opening 127 and the second opening 128, respectively, defined by the frame 120. In some embodiments, when the subsea deployment device 100 includes a single opening 127 or 128, the first primary lift point 131 and the second primary lift point 132 can be positioned at least partially beneath the single opening 127 or 128. In some embodiments, the first lifting line 160 and the second lifting line 170 can each be routed through the single opening 127 or 128 or the first opening 127 and the second opening 128, respectively. In some embodiments, the first lifting line 160 and/or the second lifting line 170 can contact the upper end 121 of the frame 120 when the first lifting line 160 and/or the second lifting line 170 are taut to help stabilize the subsea deployment device 100. In other embodiments, the subsea deployment device 100 can be configured such that the first lifting line 160 and/or the second lifting line 170 do not contact the upper end 121 of the frame 120 when the first lifting line 160 and the second lifting line 170 are taut.

In some embodiments, the frame 120 can include a first curved structure 135 and a second curved structure 136. In some embodiments, the first curved structure 135 and the second curved structure 136 can each be disposed on or otherwise extend from the first longitudinal side 123 of the frame 120. In some embodiments, the first curved structure 135 and the second curved structure 136 can each be secured to or otherwise supported by one or more posts 137 (three are shown) that can be secured to the frame 120, e.g., the first longitudinal side 123 of the frame 120. The first curved structure 135 and the second curved structure 136 can be a curved grate 138 (shown), a plate or other structure (not shown) that can have an outer curved structure or outer curved side 139a, 139b. In some embodiments, the outer side 139a of the first curved structure 135 and outer side 139b of the second curved structure 136 can be orientated away from one another. Said another way, the outer side 139a of the first curved structure 135 can be orientated toward the first lateral end 125 of the frame 120 and outer side 139b of the second curved structure 136 can be orientated toward the second lateral end 126 of the frame 120.

In some embodiments, the outer side 139a of the first curved structure 135 and the outer side 139b of the second curved structure 136 can each define or have at least one radius. In some embodiments, the radii of the outer sides 139a, 139b of the first curved structure 135 and the second curved structure 136 can each be greater than a minimum bend radius of the first subsea conduit. It should be understood, however, that the outer sides 139a, 139b of the first and second curved structures 135, 136 can have a non-circular cross-sectional shape, which would not correspond to a radius of a circle. For example, in some embodiments, the outer side 139a and/or 139b can have a non-circular elliptical shape when viewed from the side such that the two focal points of the elliptical shape are not equal to one another, as in a circle. In another example, the outer side 139a and/or 139b can have an oval, parabola, or any other curved non-circular surface, including combinations of circular, oval, parabola, and/or any other curved non-circular surface.

In some embodiments, the frame 120 can include a third curved structure 140 and a fourth curved structure 141. In some embodiments, the third curved structure 140 and the fourth curved structure 141 can each be disposed on or otherwise extend from the frame 120, e.g., the second longitudinal side 124 of the frame 120. In some embodiments, the third curved structure 140 and the fourth curved structure 141 can each include a plurality of posts 137 and a curved grate 138 or a curved plate (not shown) that can have an outer surface or an outer side 139c, 139d respectively. In some embodiments, the outer side 139c of the third curved structure 140 and the outer side 139d of the fourth curved structure 141 can be orientated away from one another. Said another way, the outer side 139c of the third curved structure 140 can be orientated toward the first lateral end 125 of the frame 120 and the outer side 139d of the fourth curved structure 141 can be orientated toward the second lateral end 126 of the frame 120.

In some embodiments, the outer side 139c of the third curved structure 140 and the outer side 139d of the fourth curved structure 141 can each define or have at least one radius. In some embodiments, the radii of the third curved structure 140 and the fourth curved structure 141 can each be greater than a minimum bend radius of the second subsea conduit. It should be understood, however, that the outer sides 139c, 139d of the third and fourth curved structures 140, 141 can have a non-circular cross-sectional shape, which would not correspond to a radius of a circle. For example, in some embodiments, the outer side 139c and/or 139d can have a non-circular elliptical shape when viewed from the side such that the two focal points of the elliptical shape are not equal to one another, as in a circle. In another example, the outer side 139c and/or 139d can have an oval, parabola, or any other curved non-circular surface, including combinations of circular, oval, parabola, and/or any other curved non-circular surface.

In some embodiments, the frame 120 can include at least one connector first part, four are shown 145a, 145b, 145c, 145d, in Figure 1. In some embodiments, the at least one connector first part 145a, 145b, 145c, and/or 145d can be selected or configured to be compatible with a connector second part 103a, 103b, 103c, or 103d that can be disposed on an end of the first subsea conduit101. In some embodiments, the first subsea conduit 101 can include a connector second part 103a disposed on the first end of the first subsea conduit101 and a connector second part103b disposed on the second end of the first subsea conduit101. In some embodiments, the connector second part 103a of the first subsea conduit101 can be connected to the connector first part 145a and the first subsea conduit 101 can be wound, located, placed, or otherwise disposed around or about the first curved structure 135 and the second curved structure 136. In some embodiments, the first subsea conduit 101 can be wound around the first curved structure 135 and the second curved structure 136 in a "figure 8" configuration as shown in Figure 8. In some embodiments the connector second part 103b of the first subsea conduit 101 can be connected to the connector first part 145b.

In some embodiments, the second subsea conduit 102 can be disposed on the subsea deployment device 100. In some embodiments, a connector second part 103c of the second subsea conduit 102 can be connected to the connector first part 145c and the second subsea conduit 102 can be wound around the third curved structure 140 and the fourth curved structure 141. In some embodiments, the second subsea conduit 102 can be wound around the third curved structure 140 and the fourth curved structure 141 in a "figure 8" configuration as shown in Figure 8. In some embodiments, the connector second part 103d of the second subsea conduit 102 can be connected to the connector first part 145d. In some embodiments, the subsea deployment device 100 can be configured to receive or accommodate or store the first subsea conduit 101 and the second subsea conduit 102 simultaneously. In some embodiments, the radius or other curve of the first and second curved structures 135, 136, respectively, can be greater than a minimum bend radius of the first subsea conduit 101 and the radius or other curve of the third and fourth curved structures 140, 141 can be greater than a minimum bend radius of the second subsea conduit 102 so as to reduce or prevent overbending of the first and/or second subsea conduits 101, 102. In some embodiments, the connector second part 103d of the second subsea conduit 102 can be connected to the connector first part 145d.

As noted above and as shown in Figures 4 to 6, in some embodiments, the subsea deployment device 100 can be configured to connect to the first lifting line 160 and to the second lifting line 170. In some embodiments, the first lifting line 160 can include a first end 161 and a second end 162 and the second lifting line 170 can include a first end 171 and a second end 172. In some embodiments the first end 161 of the first lifting line 160 can be configured to be connected to the first primary lift point 131 and/or the first secondary lift point 133. In some embodiments, the first end 171 the second lifting line 170 can be configured to be connected to the second primary lift point 132 and/or the second secondary lift point 134. In some embodiments, the first end 161 of the first lifting line 160 can be configured to be connected to the first primary lift point 131 and/or the first second lift point lift point 133 via a connector or linking apparatus 163. In some embodiments, the first end 171 of the second lifting line 170 can be configured to be connected to the second primary lift point 132 and/or the second secondary lift point134 via a connector or linking apparatus 173. In some embodiments, the connectors or linking apparatus 163 and 173 can independently be an anchor/bow shackle, a chain/D shackle, an H-shackle, or any other shackle or combination of shackles. In some embodiments, the connectors or linking apparatus 163 and 173 ca be a configured to be disconnected and/or connected by a remotely operated vehicle, which can also be referred to as a ROV shackle. In some embodiments, the connectors or linking apparatus 163 and 173 can independently be a shackle, a wide body shackle, a long reach shackle, a sheet pile shackle, or any other suitable shackle.

In some embodiments, when the first end 161 of the first lifting line 160 is connected to the first primary lift point 131, the first lifting line 160 can be routed through the first opening 127. In some embodiments, when the first end 171 of the second lifting line 170 is connected to the second primary lift point 132, the second lifting line 170 can be routed through the second opening 128 or if a single opening is defined by the frame 120, both the first and second lifting lines 160, 170 can be routed through the single opening. In some embodiments, when the first end 161 of the first lifting line 160 is connected to the second primary lift point 133, the first lifting line 160 can be routed through an optional housing (not shown), e.g., a tubular member, or a guide that can be secured to the upper end 121 of the frame 120. In such embodiment, when the first lifting line 160 is disconnected to the first secondary lift point 133, the optional housing can be configured to maintain the first lifting line 160 above or otherwise sufficiently away from the frame 120 or can guide the first lifting line 160 into a space between the first longitudinal side 123 and the second longitudinal side 124 so that the first lifting line 160 does not interfere with the winding and unwinding of one or more conduits onto/from the subsea deployment device 100. In some embodiments, when the first end 171 of the second lifting line 170 is connected to the second secondary lift point 134, the second lifting line 170 can be routed through an optional housing (not shown), e.g., a tubular member or a guide, that can be secured to the upper end 121 of the frame 120. In such embodiment, when the second lifting line 170 is disconnected to the second primary lift point 132, the optional housing can be configured to maintain the second lifting line 170 above or otherwise sufficiently away from the frame 120 or can guide the first lifting line 160 into a space between the first longitudinal side 123 and the second longitudinal side 124 so that the second lifting line 170 does not interfere with the winding and unwinding of one or more conduits onto the subsea deployment device 100. In some embodiments, the first and second lifting lines 160, 170 can each be or can include, but are not limited to, one or more segments of chain, one or more segments of wire rope, one or more segments of synthetic rope, or any combination thereof.

In some embodiments, as shown in Figures 4 to 6, the second end 162 of the first lifting line 160 and the second end 172 of the second lifting line 170 can be attached, joined, linked, or otherwise connected to a primary lifting device line 181. In some embodiments, the second end 162 of the first lifting line 160 and the second end 172 of the second lifting line 170 can be attached, joined, linked, or otherwise connected to the lifting device line 181 via a joining link 180. The lifting device line 181 can be a line, wire, cable rope, other elongated member that can be connected to a lifting device, e.g., a crane or a winch, or any combination thereof that can be disposed on a vessel.

In some embodiments, the second end 162 of the first lifting line 160 and the second end 172 of the second lifting line 170 can be connected to one another via the joining link 180. The joining link 180 can be any type of joining link 180. Non-limiting examples of types of suitable joining links 180 can include, but are not limited to, a master link, e.g., an oblong master link, a pear shaped master link, a shackle, e.g., a wide body shackle, a soft grommet, or a combination thereof. In embodiments where the second end 162 of the first lifting line 160 and the second end 172 of the second lifting line 170 are joined together, the first opening 127 defined by the upper end 121 of the frame 120, and if present, the optional second opening 128 defined by the upper end 121 of the frame 120 can be sized and positioned such that when the first lifting line 160 and second lifting line 170 are connected to the first primary lift point 131 and the second primary lift point 132 and the first lifting line 160 and second lifting line 170 are in a taut configuration, for example, when the first lifting line 160 and second lifting line 170 are supporting a weight of the subsea deployment device 100, the first lifting line 160 and the second lifting line 170 do not contact the upper end 121 of the frame 120.

In some embodiments, where the second end 162 of the first lifting line 160 and the second end 172 of the second lifting line 170 are joined together via the joining link 180 and disposed through the first opening 127 and the optional second opening 128 if present, and the first lifting line 160 and second lifting line 170 are in a slack configuration. In some embodiments, when the subsea deployment device 100 has been lowered to the seabed and a lifting device line 181 has been disconnected from the joining link 180, the first lifting line 160 and the second lifting line 170 can be at least partially located between the first longitudinal side 123 and second longitudinal side 124 of the frame 120. In some embodiments, when the subsea deployment device 100 has been lowered to the seabed and a lifting device line 181 has been disconnected from the joining link 180, at least a portion of the first lifting line 160 and at least a portion of the second lifting line 170 can extend below the upper end 121 of the frame 120 and such portions of the first and second lifting lines 160, 170 can be at least partially or entirely located between the first longitudinal side 123 and second longitudinal side 124 of the frame 120. In some embodiments, when the lifting device line 181 has been disconnected from the joining link 180, the joining link 180 and/or the second end 162 of the first lifting line 160 and second end 172 of the second lifting line 170 can sit "proud" on the upper end 121 of the frame 120. Said another way, the joining link 180 or the second end 162 of the first lifting line 160 and the second end 172 of the second lifting line 170 can be oriented substantially vertical, such that the lifting device line 181 can be reconnected to the joining link 180 or to the second end 162 of the first lifting line 160 and the second end 172 of the second lifting line 170 via a remotely operated vehicle (ROV). In some embodiments, the upper end 121 of the frame 120 can include a saddle 129 into which the joining link 180 can sit in such that the joining link 180 sits "proud" or is in a substantially vertical orientation when the lifting device line 181 is not connected to the joining link 180.

In some embodiments, the first lifting line 160 and the second lifting line 170 can be positioned relative to the first subsea conduit 101 that can be disposed about the first curved structure 135 and the second curved structure 136 of the subsea deployment device 100 such that the first lifting line 160 and second lifting line 170 are at a reduced risk or not at risk of contacting the first subsea conduit 101 when the first subsea conduit 101 is being deployed or removed from the subsea deployment device 100. In some embodiments, when the first subsea conduit 101 is wound about the first curved structure 135 and second curved structure 136, the second subsea conduit 102 is wound about the third curved structure 140 and fourth curved structure 141, the first end 161 of the lifting line 160 is connected to the first primary lift point 131, the first end 171 of the second lifting line 170 is connected to the second primary lift point 132, and the first lifting line 160 and the second lifting line 170 are in a slack configuration, the first lifting line 160 and the second lifting line 170 can be at least partially positioned between the first subsea conduit 101 and the second subsea conduit 102. In some embodiments, the first subsea conduit 101 and the second subsea conduit 102 can be removed from the subsea deployment device 100 by a remotely operated vehicle. In some embodiments, the first subsea conduit 101 and the second subsea conduit 102 can each be removed from the subsea deployment device 100 by a ROV without risk of entanglement or contact with the first lifting line 160 or second lifting line 170.

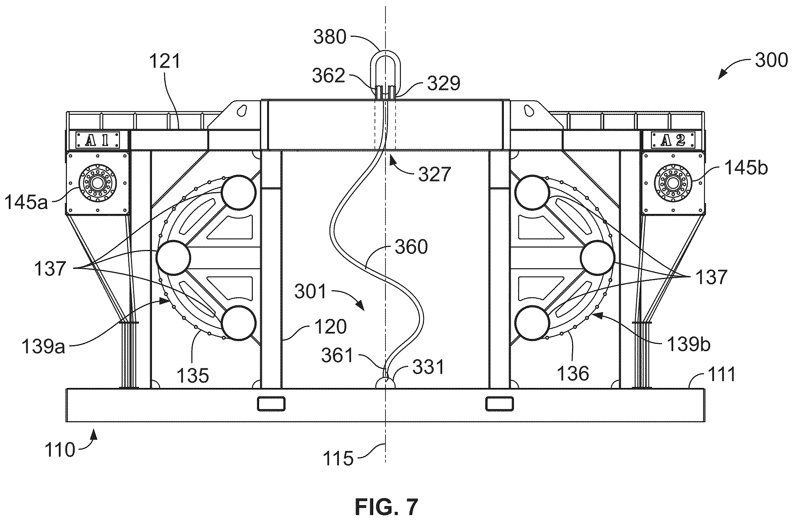

Figure 7 depicts a side elevation of a subsea deployment device 300 that can include a lifting line 360, according to one or more embodiments. In some embodiments, the subsea deployment device 300 can be similar to the subsea deployment device 100. The subsea deployment device 300 can include the landing structure 110, the frame 120, and the lifting line 360. In some embodiments, a center point 301 of the landing structure 110 can be defined as an intersection between the lateral central plane 115 and the longitudinal central plane 114 and the landing structure 110 of the subsea deployment device 100. In some embodiments, the frame 120 can be free of the first lift point 131 and the second lift point 132. In some embodiments, the subsea deployment device 300 can be free of the first lifting line 160 and the second lifting line 170 and the upper end 121 of the frame 120 can exclude or not define the optional second opening 128.

In some embodiments, the upper end 121 of the frame 120 can define an opening 327 and the opening 327 can at least partially overlap or otherwise align with the center point 301 of the landing structure 110. In some embodiments, the upper end 121 of the frame 120 can define an opening 327 and the opening 327 can be aligned with the center point 301 of the landing structure 110. In some embodiments, the opening 327 defined by the upper end 121 of the frame 120 can have a cylindrical shape. In some embodiments, a lift point 331 can be disposed on the landing structure 110 or on the frame 120. In some embodiments the lift point 331 can be aligned with the opening 327 defined by the upper end 121 of the frame 120 and, in other embodiments, the lift point 331 can be disposed at an offset location with respect to the opening 327, not shown. In some embodiments, the lift point 331 can be configured to have the lifting line 360 connected thereto. In some embodiments, the lifting line 360 can include a first end 361 and a second end 362. In some embodiments, the first end 361 can be connected to the lift point 331 and the lifting line 360 can be disposed through the opening 327. In some embodiments, the frame 120 can include the first curved structure 135, the second curved structure 136, the third curved structure 140, and the fourth curved structure 141. In some embodiments, the first subsea conduit 101can be configured to be wound about the first curved structure 135 and the second curved structure 136, and the second subsea conduit 102 can be wound about the third curved structure 140 and the fourth curved structure 141. In some embodiments, when the first end 361 of the lifting line 360 can be connected to the lift point 331 and disposed through the opening 327 defined by the upper end 121 of the frame 120, the lifting line 360 can be disposed between the first subsea conduit 101 and the second subsea conduit 102. In some embodiments, when the lifting line 360 is in a slack configuration, as shown in Figure 7, the lifting line 360 can be at least partially positioned between the first subsea conduit 101 and the second subsea conduit 102, and the lifting line 360 can remain out of contact with the first subsea conduit 101 and the second subsea conduit 102.

In some embodiments, the first subsea conduit 101and the second subsea conduit 102 can each be removed from the subsea deployment device 100 by a remotely operated vehicle without risk of entanglement or contact with the lifting line 360. In some embodiments, the second end 362 of the lifting line 360 can be connected to a joining link 380. In some embodiments, the second end 362 of the lifting line 360 can sit "proud" on the upper end 121 of the frame 120, or within the opening 327. Said another way, the second end 362 of the lifting line 360 can be oriented substantially vertical such that the lifting device line 181 can be connected to the second end 362 of the lifting line 360 or to the joining link 380 via a remote-operated vehicle. In some embodiments, the upper end 121 of the frame 120 can include a saddle 329 into which the joining link 180 can sit, such that the joining link 380 or the second end 362 of the lifting line 360 sits "proud" or is in a substantially vertical orientation when the lifting line 360 is not connected to the joining link 180, such that the lifting device line 181 can be readily connected to the second end 362 of the lifting line 360 or to the joining link 380 via a remote operated vehicle.

In some embodiments, a process for deploying a subsea conduit, e.g., subsea conduit 101 or 102, can include obtaining the subsea deployment device 100 that can be configured with the first end 161 of the first lifting line 160 connected to the first primary lift point 131 or the first secondary lift point 133 and the first end 171 of the second lifting line 170 connected to the second primary lift point 132 or the second secondary lift point 134. In some embodiments, the first lifting line 160 and the second lifting line 170 can be disposed through the first opening 127 or through the first opening 127 and the optional second opening 128, respectively. In some embodiments, the process for deploying the subsea conduit can include obtaining the subsea deployment device 300 that can be configured with the first end 361 of the lifting line 360 connected to the lift point 331 and the lifting line disposed through the opening 327. The process can include winding the first subsea conduit about the first curved structure 135 and the second curved structure 136; deploying the subsea deployment device 100 to the seabed; and disposing the first lifting line 160 and the second lifting line 170 in a slack configuration.

In some embodiments of the process, the first subsea conduit 101 can be wound about the first curved structure 135 and the second curved structure 136 in a figure 8 configuration. In some embodiments, the process can further include deploying the first subsea conduit 101 from the subsea deployment device 100 with a remotely-operated vehicle. In some embodiments, the process can include lifting the subsea deployment device 100 with a lifting device disposed on a floating vessel and lowering the subsea deployment device 100 to the seabed with the lifting device.

In some embodiments, a process for deploying a subsea conduit can include providing the subsea deployment device 300 that can be configured with the first end 361 of the lifting line 360 connected to the lift point 331; winding the first subsea conduit 101 about the first curved structure 135 and the second curved structure 136; deploying the subsea deployment device 300 to the seabed; and disposing the lifting line 360 in a slack configuration, such that the lifting line 360 does not contact the first subsea conduit or is at least partially disposed between the first lateral end 125 and the second lateral end 126. In some embodiments, the process can include winding the second subsea conduit 102 about the third curved structure 140 and the fourth curved structure 141, such that the lifting line 360 is disposed between the first subsea conduit 101 and the second subsea conduit 102 when the lifting line 360 is in a slack configuration.

The present disclosure further relates to any one or more of the following embodiments:
A1 A subsea deployment device, comprising: a landing structure; and a frame, comprising: a first lateral end, a second lateral end, an upper end, a lower end, a first longitudinal side, and a second longitudinal side; a lift point; and a first curved structure and a second curved structure extending away from the first longitudinal side of the frame, wherein: the lower end of the frame is fixedly attached to the landing structure, the lift point is disposed on the frame or the landing structure, the lift point is configured to connect a lifting line thereto, and the frame is configured such that when a first end of the lifting line is connected to the lift point, and when the lifting line is in a slack configuration, the lifting line is at least partially located between the first longitudinal side of the frame and the second longitudinal side of the frame.
A2. The subsea deployment device of paragraph A1, wherein: the lift point is a first lift point and the lifting line is a first lifting line, the subsea deployment device further comprising: a second lift point configured to connect a second lifting line thereto, wherein: the first lift point and the second lift point are each positioned on the frame between the upper end of the frame and the lower end of the frame, and when a first end of the second lifting line is connected to the second lift point, and when the second lifting line is in a slack configuration, the second lifting line is located between the first longitudinal side of the frame and the second longitudinal side of the frame.
A3. The subsea deployment device of paragraph A1 or paragraph A2, wherein:the first curved structure and the second curved structure each define an outer side, the outer side of first curved structure is oriented toward the first lateral end of the frame, and the outer side of the second curved structure is oriented toward the second lateral end of the frame.
A4. The subsea deployment device of any one of paragraphs A1 to A3, further comprising:a third curved structure and a fourth curved structure each disposed on the second longitudinal side of the frame; and at least one connector first part disposed on the frame and configured to receive a corresponding connector second part disposed on an end of a subsea conduit, wherein: the third curved structure and the fourth curved structure each define an outer side, the outer side of third curved structure is oriented toward the first lateral end of the frame, the outer side of the fourth curved structure is oriented toward the second lateral end of the frame, the subsea deployment device is configured to receive a first subsea conduit wound about the first curved structure and the second curved structure, and the subsea deployment device is configured to receive a second subsea conduit wound about the third curved structure and fourth curved structure.
A5. The subsea deployment device of any one of paragraphs A1 to A4, further comprising the first lifting line and the second lifting line, wherein: the first ends of the first and second lifting lines are connected to the first and second lift points respectively, and when the first subsea conduit is wound about the first curved structure and the second curved structure, the second subsea conduit is wound about the third curved structure and the fourth curved structure, and the first and second lifting lines are in a slack configuration, the first and second lifting lines are located between the first and second subsea conduits and the second ends of the first and second lifting lines are supported by the upper end of the frame.
A6. The subsea deployment device of any one of paragraphs A1 to A5, wherein the second ends of the first and second lifting lines are connected to one another with a joining link and the upper end of the frame comprises a saddle to support the joining link in a vertical orientation when the first and second lifting lines are in a slack configuration.
A7. The subsea deployment device of any one of paragraphs A1 to A 6, wherein, when the first ends of the first lifting line and the second lifting line are connected to the first lift point and the second lift point, respectively, and the first lifting line and the second lifting line are in a taut configuration, the first and second lifting lines remain out of contact with the frame.
A8. The subsea deployment device of any one of paragraphs A1 to A7, wherein, when the first ends of the first lifting line and the second lifting line are connected to the first lift point and the second lift point, respectively, the first lifting line and the second lifting line are routed through an opening defined by the upper end of the frame.
A9. The subsea deployment device of any one of paragraphs A1 to A8, wherein, when the first ends of the first lifting line and the second lifting line are connected to the first lift point and the second lift point, respectively, the first lifting line is routed through a first opening defined by the upper end of the frame, and the second lifting line is routed through a second opening defined by the upper end of the frame.
A10. The subsea deployment device of any one of paragraphs A2 to A9, wherein: the first lift point is a first primary lift point and the second lift point is a second primary lift point, the frame further comprises a first secondary lift point and a second secondary lift point, the first secondary lift point is laterally disposed between the first primary lift point and the first lateral end of the frame and disposed toward or on the upper end of the frame, the second secondary lift point is laterally disposed between the second primary lift point and the second lateral end of the frame and disposed toward or ony the upper end of the frame, and the second secondary lift point is configured to be connected to the first lifting line and the fourth lifting point is configured to be connected to the second lifting line.
A11. The subsea deployment device of paragraph A1, wherein: the lift point is disposed on the landing structure, the upper end of the frame defines an opening, and the lifting line is routed through the opening defined by the upper end of the frame and configured to be connected to the lift point.
A12. The subsea deployment device of any one of paragraphs A1 to A11, wherein: the first curved structure and the second curved structure each define an outer side, the outer side of first curved structure is oriented toward the first lateral end of the frame, and the outer side of the second curved structure is oriented toward the second lateral end of the frame.
A13. The subsea deployment device of any one of paragraphs A1 to A12, comprising:a third curved structure and a fourth curved structure each disposed on the second longitudinal side of the frame; and at least one connector first part disposed on the frame and configured to receive a corresponding connector second part disposed on an end of a subsea conduit, wherein: the third curved structure and the fourth curved structure each define an outer side, the outer side of third curved structure is oriented toward the first lateral end of the frame, the outer side of the fourth curved structure is oriented toward the second lateral end of the frame, the subsea deployment device is configured to receive a first subsea conduit wound about the first curved structure and the second curved structure, and the subsea deployment device is configured to receive a second subsea conduit wound about the third curved structure and fourth curved structure.
A14. The subsea deployment device any one of paragraphs A1 to A 13, wherein the first longitudinal face and the second longitudinal face are substantially parallel to one another.
B1. A process for deploying a subsea conduit to a seabed, comprising: obtaining a subsea deployment device comprising: a landing structure; and a frame comprising: a first lateral end, a second lateral end, an upper end, a lower end, a first longitudinal side and a second longitudinal side; a lift point; and a first curved structure and a second curved structure disposed on a first longitudinal side of the frame, wherein: the lower end of the frame is fixedly attached to the landing structure, and the upper end of the frame defines an opening therethrough; connecting a first end of a lifting line to the lift point; winding a first subsea conduit about the first curved structure and second curved structure; deploying the subsea deployment device to a seabed; and configuring the lifting line in a slack configuration such that at least a portion of the lifting line is located between the first longitudinal side and the second longitudinal side of the frame.
B2. The process of paragraph B1, wherein the frame further comprises a third curved structure and a fourth curved structure disposed on the second longitudinal side of the frame, comprising, winding a second subsea conduit about the third curved structure and the fourth curved structure, wherein, when the lifting line is in the slack configuration, the lifting line is located between the first subsea conduit and the second subsea conduit.
B3. The process of paragraph B1 or paragraph B2, wherein winding the first subsea conduit about the first curved structure and the second curved structure comprises winding the first subsea conduit about the first curved structure and the second curved structure in a figure-8 configuration.
B4. The process of any one of paragraphs B1 to B3, further comprising deploying the first subsea conduit from the subsea deployment device with a remotely operated vehicle.
B5. The process of paragraphs B1 to B4, wherein deploying the subsea deployment device to the seabed comprises lifting the subsea deployment device with a lifting device disposed on a floating vessel, and lowering the subsea deployment device to the seabed with the lifting device.
C1. A subsea deployment device, comprising: a landing structure; and a frame, comprising: a first lateral end, a second lateral end, an upper end, a lower end, a first longitudinal side and a second longitudinal side; a first lift point and a second lift point positioned between the upper end and the lower end of the frame, or positioned on the upper end of the frame; and a first curved structure and a second curved structure extending away from the first longitudinal side of the frame, wherein: the lower end of the frame is fixedly attached to the landing structure, the first lift point is configured to connect a first lifting line thereto, the second lift point is configured to connect a second lifting line thereto, the upper end of the frame defines an opening therethrough configured to receive the first lifting line and the second lifting line routed therethrough or configured to receive the first lifting line and the second lifting line, or the upper end of the frame defines a first opening and a second opening therethrough, wherein the first opening is configured to receive the first lifting line routed therethrough, and wherein the second opening is configured to receive the second lifting line routed therethrough, and the frame is configured such that when a first end of the first lifting line is connected to the first lift point and a first end of the second lifting line is connected to the second lift point, and when the first lifting line and the second lifting line are in a slack configuration, the first and second lifting lines are located at least partially between the first longitudinal side of the frame and the second longitudinal side of the frame.

Certain embodiments and features have been described using a set of numerical upper limits and a set of numerical lower limits. It should be appreciated that ranges including the combination of any two values, e.g., the combination of any lower value with any upper value, the combination of any two lower values, and/or the combination of any two upper values are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

Various terms have been defined above. To the extent a term used in a claim can be not defined above, it should be given the broadest definition persons in the pertinent art have given that term as reflected in at least one printed publication or issued patent. Furthermore, all patents, test procedures, and other documents cited in this application are fully incorporated by reference to the extent such disclosure can be not inconsistent with this application and for all jurisdictions in which such incorporation can be permitted.

While certain preferred embodiments of the present invention have been illustrated and described in detail above, it can be apparent that modifications and adaptations thereof will occur to those having ordinary skill in the art. It should, therefore, be expressly understood that such modifications and adaptations may be devised without departing from the basic scope thereof, and the scope thereof can be determined by the claims that follow.

## Claims

1. A subsea deployment device, comprising:
a landing structure; and
a frame, comprising:
a first lateral end, a second lateral end, an upper end, a lower end, a first longitudinal side, and a second longitudinal side;
a lift point; and
a first curved structure and a second curved structure extending away from the first longitudinal side of the frame, wherein:
the lower end of the frame is fixedly attached to the landing structure,
the lift point is disposed on the frame or the landing structure,
the lift point is configured to connect a lifting line thereto, and
the frame is configured such that when a first end of the lifting line is connected to the lift point, and when the lifting line is in a slack configuration, the lifting line is at least partially located between the first longitudinal side of the frame and the second longitudinal side of the frame.

2. The subsea deployment device of claim 1, wherein:
the lift point is a first lift point and the lifting line is a first lifting line, the subsea deployment device further comprising:
a second lift point configured to connect a second lifting line thereto, wherein:
the first lift point and the second lift point are each positioned on the frame between the upper end of the frame and the lower end of the frame, and
when a first end of the second lifting line is connected to the second lift point, and when the second lifting line is in a slack configuration, the second lifting line is located between the first longitudinal side of the frame and the second longitudinal side of the frame.

3. The subsea deployment device of claim 1 or claim 2, wherein:
the first curved structure and the second curved structure each define an outer side,
the outer side of first curved structure is oriented toward the first lateral end of the frame, and
the outer side of the second curved structure is oriented toward the second lateral end of the frame.

4. The subsea deployment according to any of the preceding claims, further comprising:
a third curved structure and a fourth curved structure each disposed on the second longitudinal side of the frame; and
at least one connector first part disposed on the frame and configured to receive a corresponding connector second part disposed on an end of a subsea conduit, wherein:
the third curved structure and the fourth curved structure each define an outer side,
the outer side of third curved structure is oriented toward the first lateral end of the frame,
the outer side of the fourth curved structure is oriented toward the second lateral end of the frame,
the subsea deployment device is configured to receive a first subsea conduit wound about the first curved structure and the second curved structure, and
the subsea deployment device is configured to receive a second subsea conduit wound about the third curved structure and fourth curved structure.

5. The subsea deployment device according to any of the preceding claims, further comprising the first lifting line and the second lifting line , wherein:
the first ends of the first and second lifting lines are connected to the first and second lift points respectively, and
when the first subsea conduit is wound about the first curved structure and the second curved structure, the second subsea conduit is wound about the third curved structure and the fourth curved structure, and the first and second lifting lines are in a slack configuration, the first and second lifting lines are located between the first and second subsea conduits and the second ends of the first and second lifting lines are supported by the upper end of the frame.

6. The subsea deployment device according to any of the preceding claims, wherein the second ends of the first and second lifting lines are connected to one another with a joining link and the upper end of the frame comprises a saddle to support the joining link in a vertical orientation when the first and second lifting lines are in a slack configuration.

7. The subsea deployment device according to any of the preceding claims, wherein, when the first ends of the first lifting line and the second lifting line are connected to the first lift point and the second lift point, respectively, and the first lifting line and the second lifting line are in a taut configuration, the first and second lifting lines remain out of contact with the frame.

8. The subsea deployment device according to any of the preceding claims, wherein, when the first ends of the first lifting line and the second lifting line are connected to the first lift point and the second lift point, respectively, the first lifting line and the second lifting line are routed through an opening defined by the upper end of the frame.

9. The subsea deployment device according to any of the preceding claims, wherein, when the first ends of the first lifting line and the second lifting line are connected to the first lift point and the second lift point, respectively, the first lifting line is routed through a first opening defined by the upper end of the frame, and the second lifting line is routed through a second opening defined by the upper end of the frame.

10. A process for deploying a subsea conduit to a seabed, comprising:
obtaining a subsea deployment device comprising:
a landing structure; and
a frame comprising:
a first lateral end, a second lateral end, an upper end, a lower end, a first longitudinal side and a second longitudinal side;
a lift point; and
a first curved structure and a second curved structure disposed on a first longitudinal side of the frame, wherein:
the lower end of the frame is fixedly attached to the landing structure,
and the upper end of the frame defines an opening therethrough;
connecting a first end of a lifting line to the lift point;
winding a first subsea conduit about the first curved structure and second curved structure;
deploying the subsea deployment device to a seabed; and
configuring the lifting line in a slack configuration such that at least a portion of the lifting line is located between the first longitudinal side and the second longitudinal side of the frame.

11. The process of claim 10, wherein the frame further comprises a third curved structure and a fourth curved structure disposed on the second longitudinal side of the frame, comprising, winding a second subsea conduit about the third curved structure and the fourth curved structure, wherein, when the lifting line is in the slack configuration, the lifting line is located between the first subsea conduit and the second subsea conduit.

12. The process of claim 10 or claim 11, wherein winding the first subsea conduit about the first curved structure and the second curved structure comprises winding the first subsea conduit about the first curved structure and the second curved structure in a figure-8 configuration.

13. The process according to one of the claims 10 to 12, further comprising deploying the first subsea conduit from the subsea deployment device with a remotely operated vehicle.

14. The process according to one of the claims 10 to 13, wherein deploying the subsea deployment device to the seabed comprises lifting the subsea deployment device with a lifting device disposed on a floating vessel, and lowering the subsea deployment device to the seabed with the lifting device.

15. A subsea deployment device, comprising:
a landing structure; and
a frame, comprising:
a first lateral end, a second lateral end, an upper end, a lower end, a first longitudinal side and a second longitudinal side;
a first lift point and a second lift point positioned between the upper end and the lower end of the frame, or positioned on the upper end of the frame; and
a first curved structure and a second curved structure extending away from the first longitudinal side of the frame, wherein:
the lower end of the frame is fixedly attached to the landing structure,
the first lift point is configured to connect a first lifting line thereto,
the second lift point is configured to connect a second lifting line thereto,
the upper end of the frame defines an opening therethrough configured to receive the first lifting line and the second lifting line routed therethrough or the upper end of the frame defines a first opening and a second opening therethrough, wherein the first opening is configured to receive the first lifting line routed therethrough, and wherein the second opening is configured to receive the second lifting line routed therethrough, and
the frame is configured such that when a first end of the first lifting line is connected to the first lift point and a first end of the second lifting line is connected to the second lift point, and the first lifting line and the second lifting line are in a slack configuration, the first and second lifting lines are located at least partially between the first longitudinal side of the frame and the second longitudinal side of the frame.
